# EUROPEAN PATENT SPECIFICATION

(11) **EP 2 934 195 B1**
(45) Date of publication and mention of the grant of the patent: **31.07.2019**
(21) Application number: 12824864.8
(22) Date of filing: 20.12.2012
(51) Int. Cl.: A23N 7/02, A47J 17/14

(54) **PROCESSING AND PEELING MACHINE FOR MANGO**
VERARBEITUNGS- UND SCHÄLMASCHINE FÜR MANGO
MACHINE À PROCÉDER ET ÉPLUCHER DES MANGUES

(43) Date of publication of application: 28.10.2015
(73) Proprietor: PND Costruzioni Elettromeccaniche S.r.l., 84018 Scafati (SA) (IT)
(72) Inventor: PARLATO, Giovanni, 84010 Sant'Egidio del Monte Albino (SA) (IT); DI PRISCO, Vincenzo, 84018 Scafati (SA) (IT)
(74) Representative: Autuori, Angelo
(86) International application number: PCT/IT2012/000388
(87) International publication number: WO 2014/097329

(56) References cited:
- WO-A1-2011/132090
- US-A- 5 250 311
- US-A- 5 806 414
- US-A1- 2005 028 686
- US-A1- 2006 288 881

## Description

### Technical field

Subject of this invention is the processing and the manual machine at mechanical and pneumatic operating which carry out peeling operation on mango or other similar fruits. Such operation is done though a blade that follows on the mango surface, that is handle in vertical position with a special feeding and loading system at blades tool and is put in rotation through a rotating spindle. While the machine peels, the fruits are loaded simultaneously on a loading plane at linear feed. Finished the peeling processing the fruit falls down on a conveyor belt to be transferred to further processing operations.

### State of the Art

Machines for mangos peeling with similar features as in the subject of this invention do not result to claimant. In particular it is known to claimant that on the market there are machines for mango peeling with huge sizes and a sort of structural complessity, that have high maintenance costs, difficulty in blades replacement, difficulties of operator access to fruits loading stations and, low production in term of hourly number of peeled fruits; conversely, it is known as well easy machines for mangos peeling, mainly manual.

US2005/028686 discloses an example of these known machines.

### Purposes and advantages of invention

To obtain mango particular suitable to the next processing (for example coring processing) these must be well skinned off. For this reason an element useful for a mango automatic processing is an easy and reliable blocking system.

Other important requirement in a modern machine for mango processing is the structural and management semplicity, so that you can have a continue processing cycle, reducing downtime at minimum; cycle allowed by synchronized management between the peeling step and the fruit loading step, and realizes the simultaneous between the fruit loading step and the peeling step, obtaining a significant production even using a smaller machine.

Therefore, purpose of this invention is a small machine which is able to do peeling operation needed to obtain a skinned off mango suitable for the next processing steps, reducing scrap at minimum, guarantying an excellent product aesthetic, avoiding all sort of environmental during all the working process steps and with a significant hourly production.

The above purposes are achieved by a process according to claim 1 and a machine according to claim 2.

### Description of drawings and way to realize the invention

These and other characteristics as well as advantages will be clear in the following description and enclosed drawings supplied by way of a non-limiting example in which:

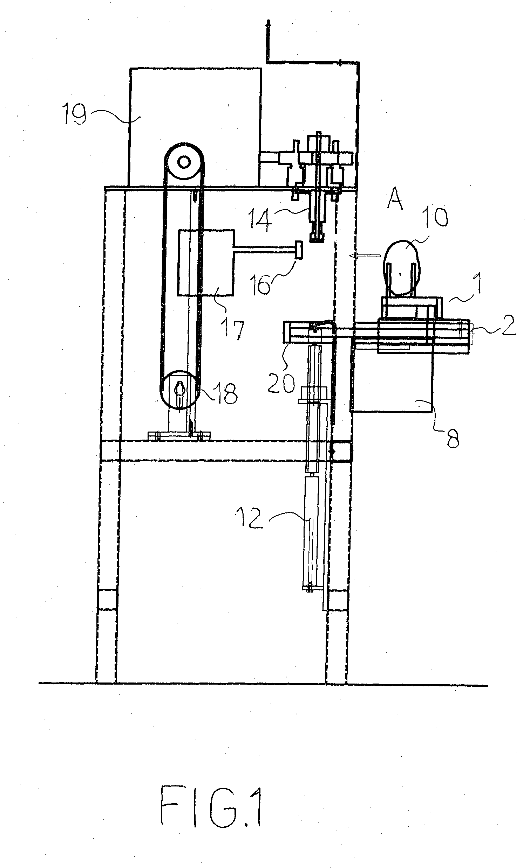

The figure 1 shows a side diagram view of the machine when the fruit is loaded on the loading plane.

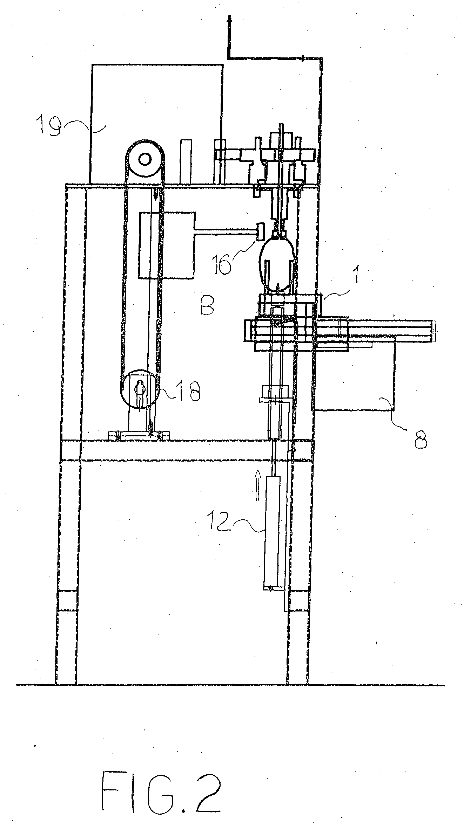

The figure 2 shows a side diagram view of the machine when the fruit placed on the loading plane is caught between the upper and lower poles by the rotating spindle.

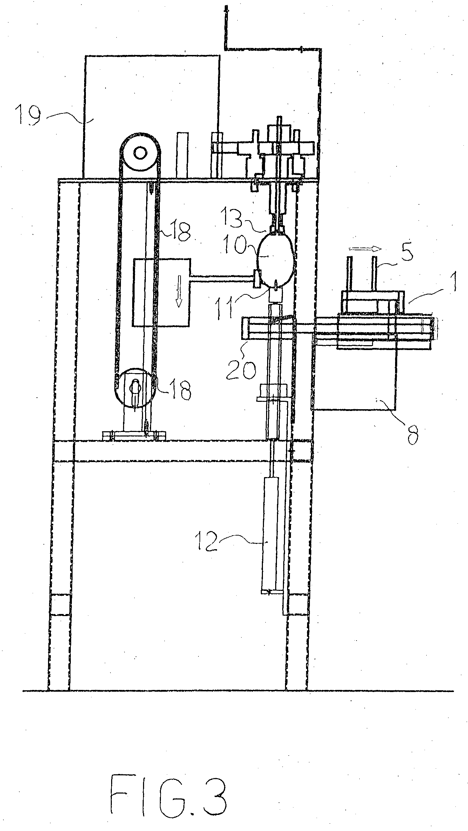

The figure 3 shows a side diagram view of the machine when the fruit is peeled in the axial position.

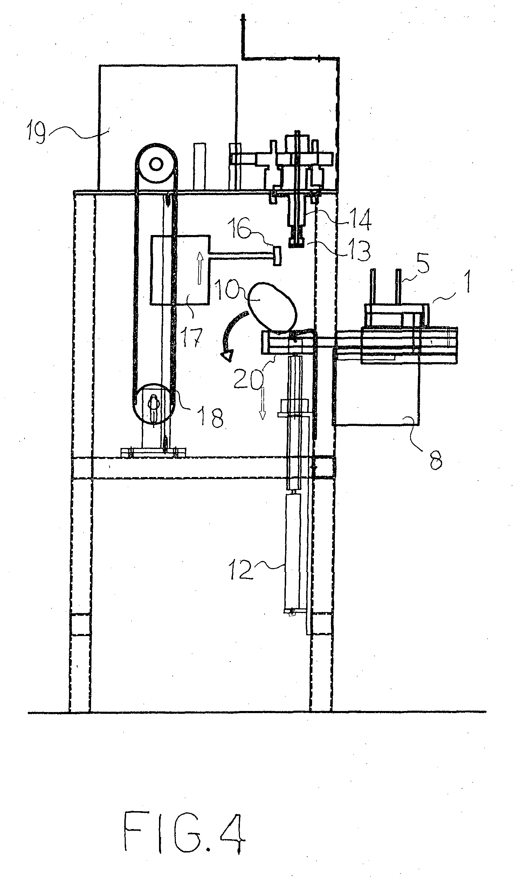

The figure 4 shows a side diagram view of the machine when the peeled fruit falls down on the conveyor belt.

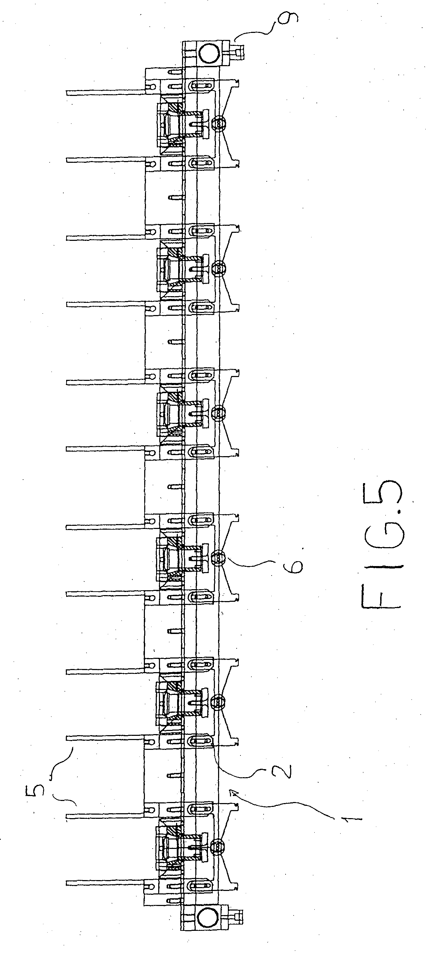

The figure 5 shows a global frontal view of the feeding loading plane and fruit holding.

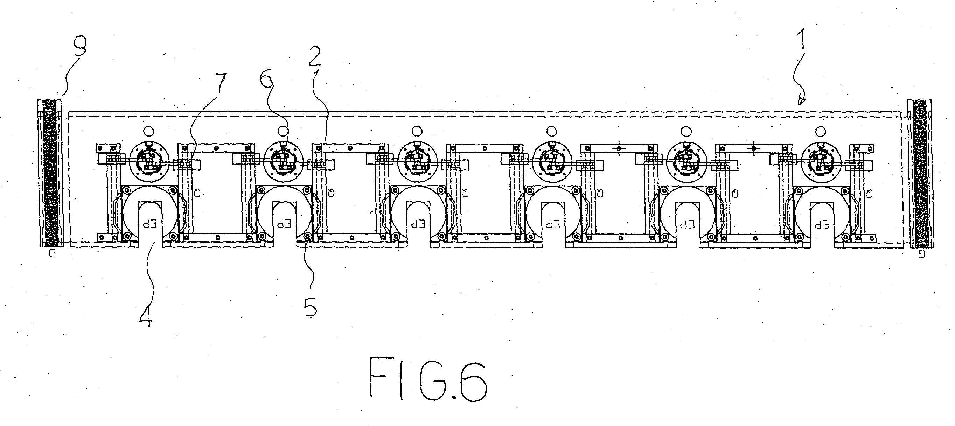

The figure 6 shows a global upper view of the feeding loading plane and fruit holding.

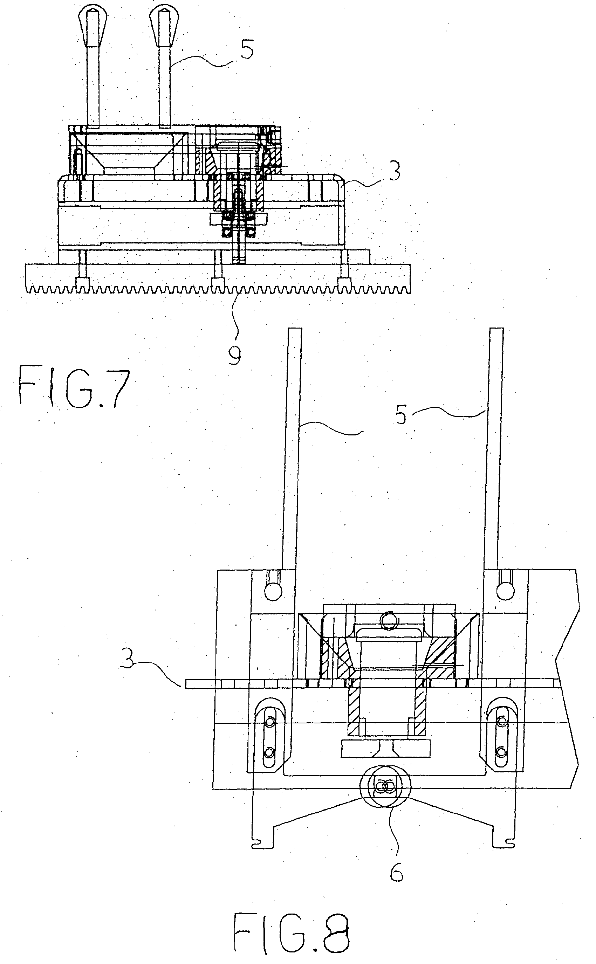

The figures 7 and 8 show resp. a global side and frontal view of the feeding loading plane and fruit holding.

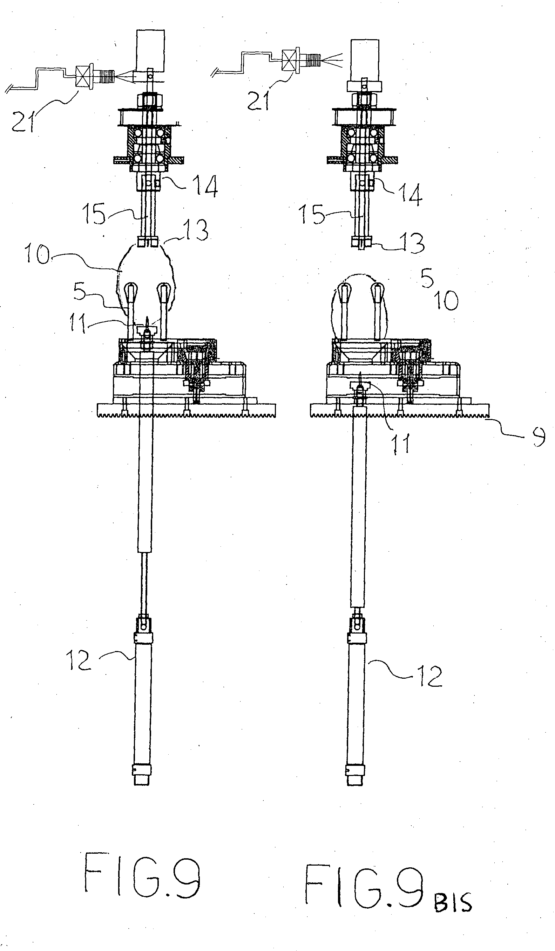

The figures 9 and 9bis show the feeding and loading system and the fruit blocking in the processing station.

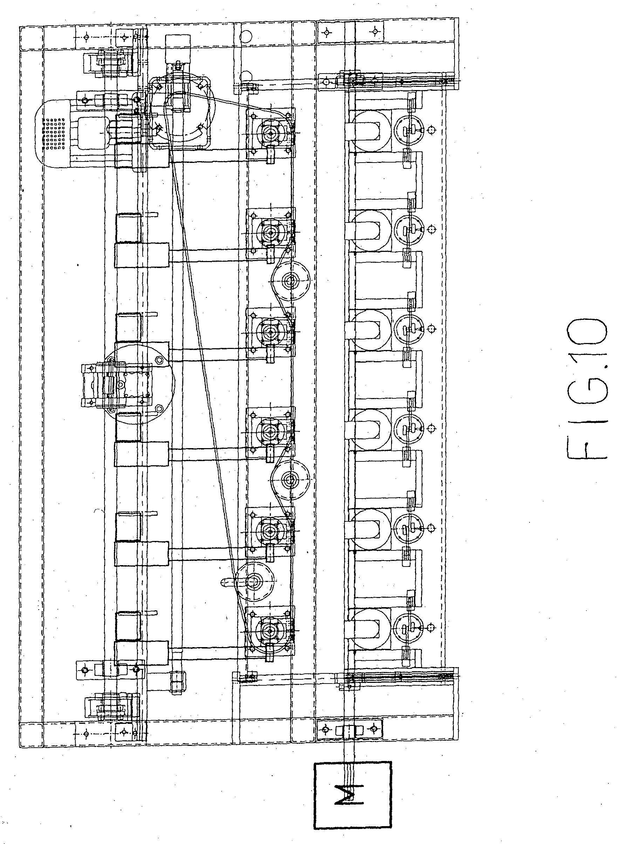

The figure 10 shows an upper global view of the machine.

According to the drawings, the machine is composed of a loading plane (1) for mango and similar fruits, composed of a plate (3), a stainless steel holder (2) where six stations (4) or loading cups are fixed, having each an internal surface at cone section perforated in the centre and its scaling is drawn depending on fruit size to load, placed in sequence, in-line and equidistant; every station (4) is equipped with a fruit blocking system, composed of four small fingers (5), activated by a small piston device (6), placed in the lower and front part, and connected to some small squared structure plates (7), by means of that the small fingers (5) open and close on the fruit according to the size of the mango to process, and they have the specific function to centre and keep the mango in the position desired by the operator, guarantying the perfect centering in relation to the bladed tool.

On a side, an electrical motor (8) powers the motion of alternate horizontal straight-line translation through the rack gear (9) at constant speed of the loading plane (1) and then of fruits placed in the stations (4), allowing to keep the fruit position from the step of manual loading carried out by the operator to the blocking step and automatic peeling of mango carried out by the machine. Moreover, the alternate straight-line translation of the loading plane or loading plane (1) gives the significant advantage to feed the machine with new fruits during the peeling step as well.

In the mango processing carried out by the machine we can note in particular: a position A where the loading plane (1) is external from the peeling fruit area (10), allows the positioning of fruit in the loading stations (4), in manual mode and in vertical position. The small fingers (5), according to the fruit size to peel, carry out push-open function all around the fruit, guaranteeing the stability of fruit position, avoiding movement and guaranteeing the holding of fruit positioning vertical axis (10). From motionless position A, the loading plane (1) shifts horizontally to position B, where the pin (11), powered by a pneumatic cylinder (12), runs from lower part aligned with the centre of each of station or cups (4), and approaches the fruit pushing the fruit against to the bladed tool (3) placed on the head of the rotating spindle (14), which goes through the fruit. During the go-up step, integrated in the spindle, an electromechanical system works simultaneously. It is composed of a shaft at circular section (15) which shifts axially within the spindle upward touching the fruit and suits as mechanical pression sensor for the fruit and mechanical switch for another sensor (21) which sends auto-setting signals of pneumatic cylinder shift, allowing to stop the upstroke according to fruit size and shape. That allows the fruit integrity, avoiding crushing or deformation due to fruit irregularities. So, the mango kept in an optimal position, basically vertical, is peeled through a knife (16), a circular blade on a conical sector all around the longitudinal axis of a rotating mango.

Moreover a pneumatic system which works in synchronization to the peeling step, allows to follow the fruit shape, guaranteeing an optimal peeling depending on fruit irregularity. Once that the fruit feeding is done, the loading plane (1) comes back to the position A. In this position and during the peeling process you have time to feed the loading plane (1) with new fruits to guarantee the continuity of the next step. When the loading plane comes synchronized back to the position B to feed the machine again, the peeling mechanism (17) lifts by means of a belt device (18) handled to an electric motor (19).

While the system composed of the pin (11) shifts by means of the pneumatic piston (12), the fruit bottom touches the shelf (20) so that the fruit goes out from the pin (11) and falls down on the machine conveyor belt.

It is important that the single fruit orientated is totally peeled in one step. The solution used allows an excellent process quality, reducing the scrap at minimum, having a good product looking, and being sure about the cleaning of processed fruit during all the processing steps. The machine simplicity allows very quick adjustments and settings.

In this machine we can note the use of feeding and loading system, composed in the lower part of the pin (11), which goes up or down pneumatically, and in the upper part of the head of the bladed tool (13) for scarfing assembled on the spindle (14) in the upper part in axial way to keep mango, and adjusted through a switch mechanical system and managed by electro-mechanical sensory system. The pneumatic action allows to pull the optimal pression for fruit blocking easily, so that it gears to mango sizes and consistency (very ripe or normal); such system guarantees that in its vertical blocking position mango always has the ideal processing centre.

The machine peels mangos and similar fruits; it is possible to peel also oversize, but it shall require to draw new loading stations and mangos feeding system for the real size desired. The machine capacity is up to 48 fruits per minute guaranteeing an excellent peeling result.

The peeling is adjustable and gradual, that means, according to fruit variety it is possible to set peeling thickness and the radius width covered by the peeling blade. The mango is skinned off and its sizes and irregular shape do not compromise the peeling operation.

The exclusive skill to peel different mangos varieties, included the less regular ones, the capability to follow the irregular fruit outline optimizing the finish and reducing the scrap, as well as the extreme speed in adjustments and settings, are preference elements in operators choice.

Such innovation is competitive also for the economic aspects because it allows a processing costs reduction, saving labour to have the same results with other machines.

## Claims

1. Process for peeling mango or similar fruits **characterized in that** the process is carried out by a machine including:
- a loading plane comprising loading stations (4), each loading station (4) including small fingers (5), the loading plane (1) being translatable between a motionless position and a fruit feeding and blocking position;
- a mango or similar fruits feeding and peeling area including a bladed tool movable between a lower point and an upper peeling process start point;
wherein the loading plane is external to the mango or similar fruits feeding and peeling area when is in the motionless position;
the process comprising for each of the fruits the following steps:
a) a manual loading step in one of said loading stations;
b) a blocking step;
c) a peeling step;
d) a discharging step;
wherein:
- the manual loading step of new fruits is simultaneous to the peeling step of loaded fruits;
- the discharging step and the upstroke of the bladed tool from the lower point to the peeling process start point are simultaneous to the translation step of the loading plane (1) from the motionless position to the fruit feeding and blocking position;
- the loading plane (1) in the external position in relation to the mango or similar fruits feeding and peeling area is stopped to allow the manual load of the mangos or similar fruits in the loading stations (4) in vertical position, the small fingers (5) carrying out a push-open blocking function by releasably close all around each mango or similar fruit according to the fruit size to peel, thus holding the fruit on vertical axis.

2. Machine for peeling mango or similar fruits **characterized by** the fact to include a loading plane (1), composed of:
a stainless steel holder (2) where six loading stations (4) are fixed, with interposition of a plate (3), each loading station (4) having an internal surface with conical section, perforated in the centre, the loading stations (4) being placed in sequence, in-line and equidistant; every station (4) being equipped with a fruit blocking system, composed of four small fingers (5), activated by a small piston device (6), placed in the lower and front part of the loading plane (1), and connected to corresponding small squared structure plates (7), by means of which the small fingers (5) open and close on the fruit keeping its position; on a side of the loading plane (1) an electrical motor (8) which, through a rack gear (9) powers the motion of alternate horizontal straight-line translation at constant speed of the loading plane (1) and then of fruits placed in the stations (4).

## Patentansprüche

1. Verfahren zum Schälen von Mangos oder ähnlichen Früchten, **dadurch gekennzeichnet, dass** das Verfahren von einer Maschine durchgeführt wird, umfassend:
- eine Ladefläche, die Ladestationen (4) umfasst, wobei jede Ladestation (4) kleine Finger (5) umfasst, wobei die Ladefläche (1) zwischen einer bewegungslosen Position und einer Fruchtzuführ- und Blockierposition verschiebbar ist;
- einen Mango- oder ähnlichen Früchtezuführ- und Schälbereich, der ein mit Klingen versehenes Werkzeug umfasst, das zwischen einem unteren Punkt und einem oberen Startpunkt des Schälprozesses beweglich ist;
wobei die Ladefläche außerhalb des Mango- oder ähnlichen Fruchtzuführ- und Schälbereichs liegt, wenn sie sich in der bewegungslosen Position befindet;
wobei das Verfahren für jede der Früchte die folgenden Schritte umfasst:
a) einen manuellen Ladeschritt in einer der Ladestationen;
b) ein Blockierungsschritt;
c) einen Schälschritt;
d) einen Entladeschritt;
wobei:
- der manuelle Ladeschritt der neuen Früchte zeitgleich ist mit dem Schälschritt der geladenen Früchte;
- der Entladeschritt und der Aufwärtshub des mit Klingen versehenen Werkzeugs vom unteren Punkt zum Startpunkt des Schälvorgangs zeitgleich ist mit dem Überführungsschritt der Ladefläche (1) aus der bewegungslosen Position in die Fruchtzuführ- und Blockierposition;
- die Ladefläche (1) in der äußeren Position in Bezug auf den Mango- oder ähnliche Früchtezuführ- und Schälbereich gehalten wird, um die manuelle Beladung der Mangos oder ähnlichen Früchte in den Ladestationen (4) in vertikaler Position zu ermöglichen, wobei die kleinen Finger (5) eine Pushto-Open-Blockierfunktion ausführen, indem sie jede Mango oder ähnliche Frucht entsprechend der zu schälenden Fruchtgröße lösbar umschließen und so die Frucht in der vertikalen Achse halten.

2. Maschine zum Schälen von Mangos oder ähnlichen Früchten, **dadurch gekennzeichnet, dass** sie eine Ladefläche (1) umfasst, die aus:
einem Edelstahlhalter (2) mit sechs unter Zwischenschaltung einer Platte (3) befestigten Ladestationen (4), wobei jede Ladestation (4) eine Innenfläche mit konischem Querschnitt aufweist, der in der Mitte perforiert ist, wobei die Ladestationen (4) nacheinander, in Reihe und äquidistant angeordnet sind;
jede Station (4) mit einem Fruchtblockiersystem ausgestattet ist, das aus vier kleinen Fingern (5) besteht, die durch eine kleine Kolbenvorrichtung (6) aktiviert werden, die im unteren und vorderen Teil der Ladefläche (1) angeordnet ist und mit entsprechenden kleinen quadratischen Platten (7) verbunden ist, mittels derer die kleinen Finger (5) die Fruchthalteposition öffnen und schließen; wobei auf einer Seite der Ladefläche (1) ein Elektromotor (8) über ein Zahnstangengetriebe (9) mit konstanter Geschwindigkeit die Bewegung der abwechselnden horizontalen linearen Verschiebung der Ladefläche (1) und dann der in den Stationen (4) angeordneten Früchte antreibt.

## Revendications

1. Procédé pour éplucher une mangue ou des fruits similaires, **caractérisé en ce que** le procédé est réalisé par une machine incluant :
- un plan de chargement comprenant des stations de chargement (4), chaque station de chargement (4) incluant des petits doigts (5), le plan de chargement (1) pouvant être translaté entre une position immobile et une position d'alimentation et de blocage de fruit ;
- une zone d'alimentation et d'épluchage de mangue ou de fruits similaires incluant un outil à lame mobile entre un point inférieur et un point de départ de procédé d'épluchage supérieur ;
dans lequel le plan de chargement est externe à la zone d'alimentation et d'épluchage de mangue ou de fruits similaires lorsqu'il est dans la position immobile ;
le procédé comprenant pour chacun des fruits les étapes suivantes :
a) une étape de chargement manuel dans l'une desdites stations de chargement ;
b) une étape de blocage ;
c) une étape d'épluchage ;
d) une étape de déchargement ;
dans lequel :
- l'étape de chargement manuel de nouveaux fruits est simultanée à l'étape d'épluchage de fruits chargés ;
- l'étape de déchargement et la course ascendante de l'outil à lame depuis le point inférieur jusqu'au point de départ de procédé d'épluchage sont simultanées à l'étape de translation du plan de chargement (1) de la position immobile à la position d'alimentation et de blocage de fruit ;
- le plan de chargement (1) dans la position externe par rapport à la zone d'alimentation et d'épluchage de mangue ou de fruits similaires est arrêté pour permettre le chargement manuel des mangues ou des fruits similaires dans les stations de chargement (4) en position verticale, les petits doigts (5) réalisant une fonction de blocage d'ouverture par fermeture libérable tout autour de chaque mangue ou fruit similaire selon la taille du fruit à éplucher, maintenant ainsi le fruit sur un axe vertical.

2. Machine pour éplucher une mangue ou des fruits similaires, **caractérisée par le fait qu'**elle inclut un plan de chargement (1), composé :
d'un support en acier inoxydable (2) où six stations de chargement (4) sont fixées, avec l'interposition d'une plaque (3), chaque station de chargement (4) ayant une surface interne de section conique, perforée au centre, les stations de chargement (4) étant placées en séquence, en ligne et équidistantes ; chaque station (4) étant équipée d'un système de blocage de fruit, composé de quatre petits doigts (5), activé par un petit dispositif à piston (6), placé dans la partie inférieure et avant du plan de chargement (1), et raccordé à des petites plaques de structure carrée (7) correspondantes, au moyen desquelles les petits doigts (5) s'ouvrent et se ferment sur le fruit conservant sa position ; sur un côté du plan de chargement (1) un moteur électrique (8) qui, par le biais d'un engrenage à crémaillère (9), alimente le mouvement de translation en ligne droite horizontale alternée à une vitesse constante du plan de chargement (1) puis de fruits placés dans les stations (4).
